# EUROPEAN PATENT APPLICATION

(11) **EP 1 526 384 A2**
(43) Date of publication of application: **27.04.2005**
(21) Application number: 04024893.2
(22) Date of filing: 20.10.2004
(51) Int. Cl.: G01N 35/00, G01N 35/04, G02B 21/34

(54) **Cover glass transfer device for sample sealing apparatus**

(30) Priority: 23.10.2003 JP 2003363410
(71) Applicant: Meisei Electric Co., Ltd., Tokyo 112-8511 (JP)
(72) Inventor: Tominaga, Yoshinobu, Yurigaoka, Moriya-shi, Ibaraki 302-0192 (JP); Iwanami, Michiaki, Yurigaoka, Moriya-shi, Ibaraki 302-0192 (JP); Yoshida, Jun, Yurigaoka, Moriya-shi, Ibaraki 302-0192 (JP)
(74) Representative: Pautex Schneider, Nicole

(57) **Abstract**

A cover glass transfer device for a sample sealing apparatus performs picking up a cover glass (CG), one at a time, and sealing a cell sample piece placed on a glass slide. A plurality of CGs are stacked in layers at an angle. An elevating member movable up and down with respect to the CG is provided with a holding rod and a push rod which are biased downward by a spring and are movably inserted therethrough. A suction face of a suction pad fixed on the lower end of the holding rod is disposed above the lower end of the push rod in a state where the rods are stretched out downward. The suction pad comes into contact with and holds by suction the top CG upon the descent of the elevating member following the holding rod. Due to the ascent of the elevating member, an upward force caused by the holding rod and a downward force caused by the push rod work on the top CG. Then, a downward convex deflection is provided to the CG to change a curvature thereof in a state where one end of the CG is in contact with the adjacent lower CG, thereby separating the CG off from the adjacent lower CG.

## Description

### BACKGROUND OF THE INVENTION

### 1. Field of the Invention

The present invention relates to a cover glass transfer device for a sample sealing apparatus for affixing a cover glass to a glass slide so as to seal a sample on a glass slide, which comprises an automated process of affixing a cover glass stacked in layers to a glass slide.

### 2. Description of the Related Art

In histological testing, or the like, for the purpose of microscopic observation of a cell sample piece, a sample sealing operation is carried out comprising the steps of: placing the cell sample piece on a glass slide, which is a piece of glass; dropping on to the cell sample piece a solution, which is an adhesive agent, for sample sealing; further placing a cover glass made of a thin glass plate thereon to sandwich the cell sample piece between the glass slide and the cover glass; and sealing the cell sample piece.

Such an operation for sample sealing has been mechanized. Thus, a cover glass transfer device has been suggested, which picks up and transfers a cover glass from a case onto a glass slide so as to seal a cell sample piece between the glass slide and the cover glass.

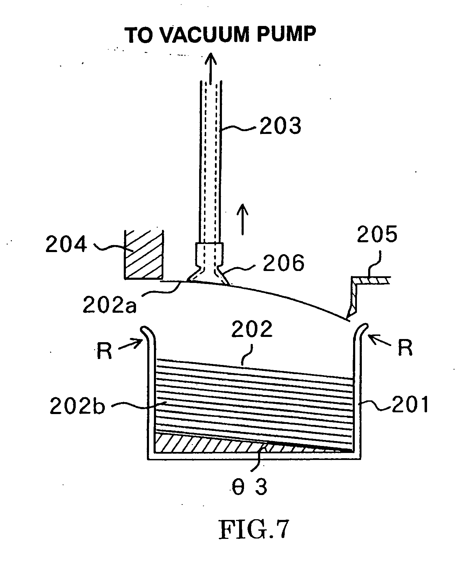

Fig. 7 shows a process for picking up a cover glass by a cover glass transfer device.

In Fig. 7, the reference numeral 201 denotes a cover glass housing case in which the opening edge, labeled R, is curved in a convex manner with respect to the inside of the case. The reference numeral 202 denotes cover glasses stacked in layers in the case 201 at an inclined angle θ3 each having one end thereof, in the longitudinal direction of the cover glass, raised.

The reference numeral 203 denotes a cover glass holding rod (to be hereafter referred to as a holding rod) which has a hollow structure inside thereof for holding a cover glass by suction. It is movable in a vertical direction and is supported by an elevating member (not shown). The upper end part of the holding rod 203 is led to a vacuum pump (not shown). The vacuum pump is switched, for example, to connect to the holding rod 203, or to the atmosphere, via an electromagnetic switching valve (not shown). This electromagnetic switching valve normally connects the holding rod 203 with the vacuum pump, and is controlled by a switching device (not shown) to switch to the atmosphere after the cover glass 202 has been affixed onto a glass slide.

On the lower end part of the holding rod 203, a suction pad 206 is fixed, which comprises an attaching face with an inclined angle θ3 identical to that of the cover glasses 202 stacked in layers.

The reference numeral 204 denotes a cover glass separating metal tool provided above the opening edge part of the case 201. The reference numeral 205 denotes a cover glass separating pawl, provided above the opening edge part of the case 201 on the opposite side to that of the cover glass separating metal tool 204. The cover glass separating metal tool 204 is fixed at a position higher than that of the cover glass separating pawl 205. As shown in Fig. 7 both the ends of the cover glass 202a, held by the holding rod 203 at the inclined angle θ3, engage the cover glass separating metal tool 204 and the cover glass separating pawl 205 at almost the same time.

As the elevating member descends, driven by an elevating drive mechanism (not shown), the holding rod 203 descends toward the top cover glass 202a of the layered stack in the case 201. Thereafter, the suction pad 206 stops descending when coming into contact with the top cover glass 202a, and holds the cover glass 202a by suction. After the cover glass 202a has been held by suction, the elevating member allows the holding rod 203 to ascend. At this time, an adjacent lower cover glass 202b in the stack may also be picked up - being attached to the lower face of the cover glass 202a.

As the holding rod 203 continues to ascend further, both longitudinally oriented ends of the held top cover glass 202a engage the separating metal tool 204 and the separating pawl 205 provided above both the opening edge parts of the cover glass housing case 201. Since the holding rod 203 continues to move upward, the cover glass 202a begins to adopt an upwardly convex deflection.

When the deflection has become sufficiently large, adjacent cover glass 202b attached to the lower face of the cover glass 202a cannot follow the thus made deflection. Then, space is formed between the cover glasses, and the adjacent cover glass 202b falls naturally due to its own weight. This allows the independent transfer of a single cover glass 202a by the holding rod 203.

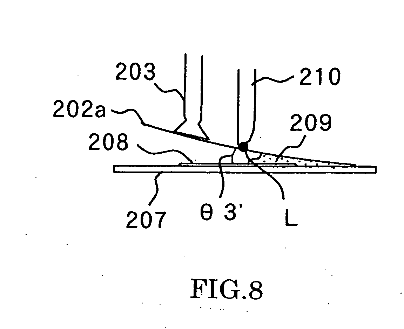

When the cover glass 202b falls, due to its own weight, the falling cover glass 202b is guided into case 201 by the curved opening edge R of the housing case 201, allowing the cover glass 202b to slip smoothly into the housing case 201. After having passed beyond the cover glass separating pawl 205, the still attached cover glass 202a returns to its flat state at the inclined angle θ3, and then proceeds to the process shown in Fig. 8 where it is affixed onto a glass slide placed on a glass slide placing base.

In Fig. 8, the reference numeral 207 denotes a glass slide placed on a glass slide placing base (not shown). A cell sample piece 208 is affixed onto the glass slide 207, and a sealing adhesive solution 209 is dropped onto second end portion of the glass slide 207 (the right side of the glass slide 207 in Fig. 8).

The holding rod 203 is positioned above the first end portion which is the other end portion with respect to the second end portion of the glass slide 207 on which the sealing adhesive solution 209 has been dropped. The cover glass 202a on the first end side is sucked by the suction pad 206 at the inclined angle θ3. Therefore, at the beginning of the affixation process, the cover glass 202a is held hanging from the suction pad 206 fixed on the holding rod 203 so as to be brought downward at the inclined angle θ3. Then, the cover glass 202a proceeds in the affixation process initially having the inclined angle θ3. At this time, an elevating member (not shown) brings the holding rod 203 down until the lower-end edge of the inclined cover glass 202a contacts the second end portion of the glass slide 207. Fig. 8 illustrates the aforementioned state wherein the lower-end edge works as a fulcrum, and the suction pad 206 as a working point.

A push rod 210 is provided to the elevating member in a vertically movable manner. The inclined cover glass 202a is further deflected by the push rod 210 so as to bend it and then to have a larger inclined angle on the upper-end edge portion of the inclined cover glass 202a exceeding θ3. The push rod 210 is disposed to escape from far above the cover glass 202 during the pick up process shown in Fig. 7. When the elevating member (not shown) moves downward to affix the cover glass 202a to the glass slide 207, push rod drive means (not shown) operates such that the push rod 210 moves downwards to bend and to push the cover glass 202a toward the glass slide 207.

Consequently, the cover glass 202a has been progressively pushed onto the glass slide 207 from one side thereof while being bent due to the descent of the push rod 210 and the suction pad 206. Upon the completion of pushing, the suction pad 206 and the push rod 210 both ascend, thereby completing the sealing operation.

As described above, the cell sample piece 208 can be sealed between the glass slide 207 and the cover glass 202a without the inclusion of air bubbles.

In the case of the publicly known cover glass transfer device mentioned above, the top cover glass can be picked up, one at a time, by separating and dropping the adjacent lower cover glass and then be transferred onto a glass slide without the inclusion of air bubbles between the glass slide and the cover glass.

However, in the case where the cover glass separating metal tool and the cover glass separating pawl are used to make a difference of radius of curvature between adjacent cover glasses to have the lower cover glass separated due to its own weight, the falling lower cover glass may not return onto the normal stacking position as getting stuck on the edge or the side wall of a case. Especially when the number of cover glass stacked in layers in the case becomes small, the falling distance becomes large such that the possibility that the cover glass does not return to the normal stacking position becomes higher. When the holding rod descends while the cover glass is being stuck inside of the case, the holding rod pushes and breaks the stuck cover glass.

### SUMMARY OF THE INVENTION

The present invention has been made in view of the aforementioned problems of the conventional technique. An object of the present invention is to provide a cover glass transfer device always capable of maintaining a cover glass to be separated off to the normal stacking position.

In the case of the publicly known cover glass transfer device, in addition to members for transferring a cover glass, a separating metal tool and a separating pawl for separating a cover glass off are provided on the upper part of the opening edge part of a case such that the device tends to be large in size. The present invention has been made in view of the aforementioned problems, therefore, another object of the present invention is to provide a cover glass transfer device which can be downsized as there is no need to provide additional members above the case.

According to a first aspect of the present invention, a cover glass transfer device for a sample sealing apparatus performing the steps of: sequentially picking up a top cover glass of a plurality of cover glasses stacked in layers by picking up means; and affixing the picked up cover glass onto a glass slide to seal a sample on the glass slide, wherein the picking up means has: an elevating member capable of moving up and down above the plurality of cover glasses stacked in layers; a holding member movable up and down for a certain stroke with respect to the elevating member, the holding member having a suction member for vacuuming the cover glass at its distal end, the suction member coming into contact with the upper face of the top cover glass on a first end side; and a push member movable up and down for a certain stroke with respect to the elevating member, the push member being attached while provided with a downward pressure, the lower end part of the push member coming into contact with the top cover glass at a position between the sucked portion with the suction member and the portion of the cover glass on a second end side, and wherein after the holding member and the push member come into contact with the top cover glass due to the descent of the elevating member the holding member ascends together with the elevating member prior to the push member upon the initiation of ascent of the elevating member so as to change a curvature of the cover glass by allowing the one end of the cover glass which is not held by the suction member to bring in to contact with an adjacent lower cover glass to deflect the cover glass downward, and then the push member is allowed to ascend together with the elevating member in an integrated manner.

According to a second aspect of the present invention, in the device of the first aspect, the plurality of cover glasses are stacked in layers at an inclined angle such that a portion of the cover glass opposite to the suction member is positioned below a portion of the cover glass opposite to the push member.

According to a third aspect of the present invention, in the device of the first or second aspect, the descending velocity of the elevating member is controlled in accordance with a stacked height of the plurality of cover glasses when the elevating member descends.

According to a fourth aspect of the present invention, in the device of any one of the first to third aspects, the cover glass is held by the holding member in a state where the held cover glass is separated from the adjacent lower cover glass stacked in layers by the ascent of the elevating member and an inclined posture of the cover glass is maintained by allowing the suction member to be placed at an upper position than that of the pushing member being in contact with the cover glass in rear of the suction member, and the elevating member descends toward the glass slide in order to affix the held cover glass onto the glass slide while maintaining the inclined posture thereof.

According to the first aspect of the invention, when an elevating member starts to ascend for picking up a cover glass, upward force acts on the first end side of the top cover glass held by suction with a suction member provided to a holding member, thereby providing downward working force by a push member, for example, onto the almost longitudinal center part of the cover glass. Thus, the cover glass is deflected downward in a state where one end of the cover glass is pushed onto the adjacent lower cover glass. As the curvature due to the deflection changes in accordance with the ascent of the elevating member, even when attaching to the top cover glass held by suction, the adjacent lower cover glass cannot follow the change of enlarging the deflection, thereby separating the adjacent lower cover glass.

At this time, the separation operation described above is carried out in the position of the top cover glass stacked in layers such that the cover glass separated off naturally falls on the normal position of the top cover glass. Accordingly, the effect can be obtained, wherein a cover glass is sequentially picked up without causing any trouble for the next picking-up.

Upon picking up a cover glass by an elevating operation of an elevating member, a cover glass which has been affixed can be separated off with a simple mechanism wherein a time shift is produced when a holding member and a push member ascend together with the elevating member.

Further, upon picking up a cover glass, the curvature of the cover glass held by suction is significantly varied such that the cover glass is separated off in the position of the top cover glass stacked in layers. Therefore, unlike the conventional technique, there is no need to provide a cover glass separating member above the opening edge part of the case and an inwardly convex rounded part R of the opening part of the case, thereby realizing the downsizing of the apparatus. The shape of the case is also simplified.

Suppose that a stand-by state is defined as that the suction face of the suction member provided at the distal end of a holding rod is positioned above the lower end of a push member. In this case, the timing when the suction member sucks the top cover glass upon the descent of the elevating member is delayed by the time period corresponding to the move of the height difference in accordance with an inclined angle of the placed top cover glass. According to the second aspect of the present invention, the top cover glass held with the holding rod by suction can be deflected in accordance with this delayed time period, thereby reliably separating an adjacent lower cover glass which has been affixed.

When the process for picking up a stacked cover glass proceeds, the stacking height is lowered such that a descending elevating member cannot stop at a given position due to an increase in acceleration. According to the third aspect of the present invention, however, the elevating member can reliably stop at a given position by decelerating the descending velocity of the elevating member when the stacking height is lowered.

According to the fourth aspect of the present invention, a cover glass held by suction is inclined by maintaining the state when the cover glass stacked in layers is picked up and is affixed to a glass slide. Thus, while maintaining the above posture of the cover glass, the cover glass is moved over the glass slide, and the elevating member is allowed to descend to bring the inclined lower end of the cover glass into contact with the second end side of the glass slide. Then, the elevating member is allowed to further descend slightly to deflect the cover glass downward convexly by pushing with the push member. As the elevating member further descends, the cover glass is affixed completely by gradually pushing the suction side thereof. After the suction member is opened to the atmosphere to release the sucking and holding, the affixation is completed.

### BRIEF DESCRIPTION OF THE DRAWINGS

Fig. 1 is a view showing a cover glass transfer device for a sample sealing apparatus according to an embodiment of the present invention where the picking-up of a cover glass is started;
Fig. 2 is a view showing a first step of the cover glass pick up process;
Fig. 3 is a view showing a second step of the cover glass pick up process;
Fig. 4 is a view showing a third step of the cover glass pick up process;
Fig. 5 is a view showing a cover glass transfer device for a sample sealing apparatus according to an embodiment of the present invention where the cover glass is affixed;
Fig. 6 is a flow chart of the first step of the cover glass pick up process;
Fig. 7 is a view showing a conventional cover glass transfer device for a sample sealing apparatus where a cover glass is picked up; and
Fig. 8 is a view showing a conventional cover glass transfer device for a sample sealing apparatus where a cover glass is picked up.

### DETAILED DESCRIPTION OF THE INVENTION

The present invention will be hereinafter described with reference to the following embodiments shown in the drawings.

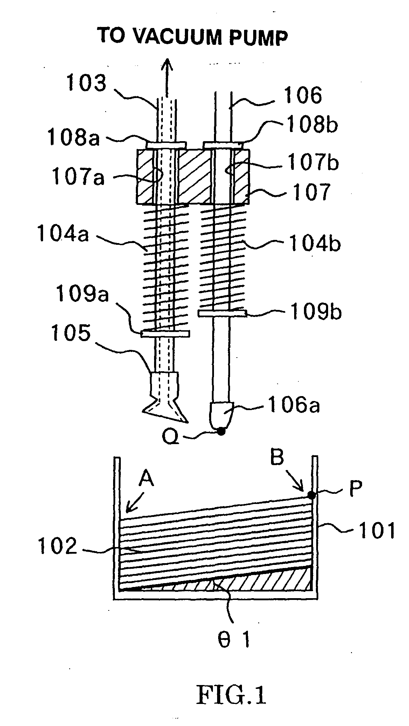

Figs. 1 to 5 show preferred embodiments of the present invention. Figs. 1 to 3 are front views of a cover glass pick up portion of a cover glass transfer device for a sample sealing apparatus, illustrating a process for picking up a cover glass from a case.

In the drawings, the reference numeral 101 denotes a cover glass housing case, and the reference numeral 102 denotes a cover glass. The case 101 of the present embodiment is provided with a base member, having an inclined angle θ1, at the bottom thereof such that the cover glasses 102 stacked in layers are housed at the inclined angle θ1 where one longitudinally oriented end edge B of the cover glass 102 is raised. Edge B refers to the upper-end edge of an inclined cover glass 102, and edge A refers to the lower end edge of the inclined cover glass 102. The inclined angle θ1 is an angle opposite in inclination to that of the conventional example shown in Fig. 7. The present case is such that a cover glass holding rod 103, which will be described later, is disposed on the proximal side of the lower-end edge A of the inclined cover glass 102.

The reference numeral 103 denotes the cover glass holding rod (to be hereafter simply referred to as a holding rod) for holding a cover glass by suction. The reference numeral 106 denotes a cover glass push rod (to be hereafter referred to as a PS rod). These rods are supported by an elevating member 107 in a manner in which they are movable up and down.

The elevating member 107 is driven by an elevating drive mechanism EL using, as a drive source, an elevating motor comprising a pulse motor for example. The control of the elevating drive mechanism EL is carried out by a control apparatus CA, which controls the whole structure of the sample sealing device. In an operational sequence of the sample sealing device, the elevating member 107 starts to descend due to a descending operation of the elevating drive mechanism EL. This is after a descent instruction is given to the elevating member 107 at a particular time after placing a glass slide on a glass slide placing base. Upon detection of a contacting pressure when a suction pad 105 contacts the cover glass 102, the drive control is initiated. Incidentally, by driving the pulse motor to rotate a lead screw or the like, a ball screw provided to the elevating member 107 and the lead screw are screwed together to move the elevating member 107.

In the state when the elevating member 107 has descended to its lowest position, a tip part of the holding rod 103, and that of the PS rod 106, can descend the distance necessary to contact a bottom wall part of the case 101 while being supported by the elevating member 107.

The holding rod 103 and the PS rod 106 are inserted through insertion holes 107a and 107b, respectively, which are formed in the elevating member 107 in a vertical direction thereof. In the state when the elevating member 107 is disposed above the case 101, the insertion hole 107a is positioned above the edge A of the cover glasses 102 stacked in layers in the case 101, and the holding rod 103 is inserted therethrough (107a). Additionally, the insertion hole 107b is positioned above edge B of the cover glasses 102 stacked in layers in the case 101, and the PS rod 106 is inserted therethrough (107b). Stopper rings 108a and 108b, capable of coming into contact with the upper face of the elevating member 107, are fixed on the upper part of the holding rod 103 and the PS rod 106, respectively. These stopper rings 108a and 108b separately control the lower parts of the holding rod 103 and the PS rod 106.

On the lower parts of the holding rod 103 and the PS rod 106, spring fixation rings 109a and 109b are separately fixed below the lower face of the elevating member 107. Between the lower face of the elevating member 107 and the spring fixation ring 109a of the holding rod 103, a holding rod spring 104a consisting of a compressed coil spring is elastically installed. Also, between the lower face of the elevating member 107 and the spring fixation ring 109b of the PS rod 106, a PS rod spring 104b consisting of a compressed coil spring is elastically installed.

Thus, the holding rod 103 and the PS rod 106 are independently supported and guided in a slidable manner, in a vertical direction, between the stopper rings 108a and 108b and the spring fixation rings 109a and 109b, respectively. At the same time they are biased downward by the spring force of each of the compressed coil springs, the holding rod spring 104a and the PS rod spring 104b.

The holding rod 103 is formed to be hollow inside. The upper end part thereof is led to a vacuum pump so as to be switched to between the vacuum pump and the atmospheric side via an electromagnetic switching valve (not shown). The switching valve is normally connected to the vacuum pump and is controlled to be switchable to the atmospheric side at the end of the process, wherein a cover glass has been attached as an addition.

On the lower end part of the holding rod 103 a cover glass suction pad 105 (to be hereafter referred to as a suction pad), which is rotatable due to a bent neck part of a hinged part thereof, is fixed. The suction pad 105 can attach to a cover glass 102, when in a vacuum condition by means of the aforementioned vacuum pump, when the suction face of the suction pad 105 comes into contact with the cover glass 102.

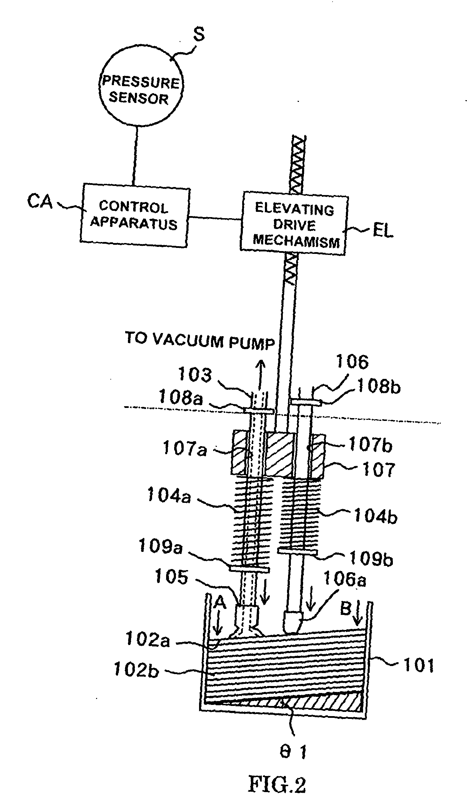

On the lower end part of the PS rod 106, a cap 106a - a protecting member made of a hard rubber, for example - is provided in order to protect the cover glass 102 from damage when the PS rod comes into contact therewith. Further, the PS rod 106 is provided with a pressure sensor S on the lower end part of the PS rod, which detects a pushing pressure onto a cover glass. A detection signal, generated by the pressure sensor S, is transmitted to the control apparatus CA as shown in Fig. 2 such that the appropriate drive control of the elevating drive mechanism EL is carried out based on the detection signal. The pressure sensor S may be provided on the axis part of the PS rod 106, rather than on the lower end part thereof. Fig. 1 shows a first step of a cover glass pick-up process.

At the beginning, when the cover glass pick-up process is initiated, the elevating member 107 is in a stand-by state in which it is disposed above the case 101. In this state the holding rod 103 and the PS rod 106, inserted through the elevating member 107, have been separately pushed down by means of the spring force of the holding rod spring 104a and the PS rod spring 104b, respectively, to the position where the stopper rings 108a and 108b of these rods have come into contact with the upper face of the elevating member 107. This state, as shown in Fig. 1, is defined as a stand-by state. In the above stand-by state, the holding rod 103 and the PS rod 106 are set such that the position of the suction face of the suction pad 105 provided on the lower end part of the holding rod 103 is higher in elevation than the lower end part of the cap 106a provided on the lower end part of the PS rod 106. Further, the PS rod 106 is set to come into contact with an almost central part (in a longitudinal direction) of a cover glass when descending toward the case 101.

When the elevating member 107 starts to descend from its position in the stand-by state, the cap 106a fixed on the push rod 106 (which descends on the side of the edge B of the cover glasses 102 stacked in layers) comes into contact with a cover glass 102a before the suction pad 105 fixed on the lower end part of the holding rod 103. This is due to their relative vertical positional relationship in the stand-by state, and the inclination of the cover glasses 102.

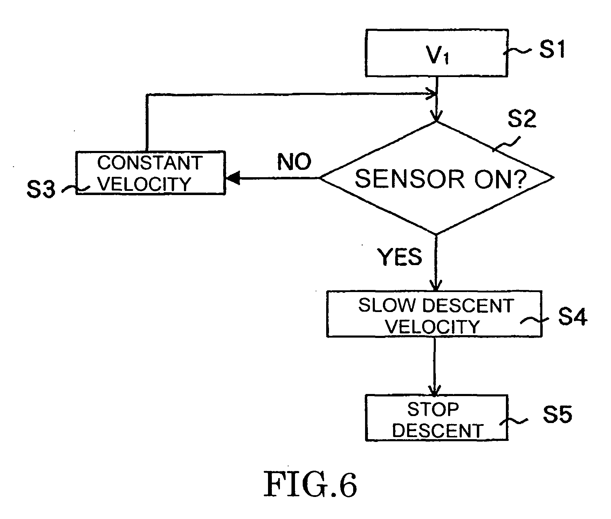

If the elevating member 107 continues to further descend, the suction pad 105 fixed on the holding rod 103 comes into contact with a cover glass 102a as shown in Fig. 2. The series of operations wherein the elevating member 107 in the stand-by state starts to descend, and allows the holding rod 103 and the PS rod 106 to come into contact with the cover glass 102, is controlled by the control apparatus CA in accordance with the flow chart shown in Fig. 6.

The elevating member 107 starts to descend at a velocity V1 (S1) and the control apparatus determines whether the pressure sensor S provided on the PS rod 106 detects the pressure generated when that the PS rod 106 comes into contact with the cover glass 102a within a predetermined time (T1) (S2). The elevating member 107 descends at a constant velocity, based on the determination that there is a long distance between the elevating member 107 and the cover glass 102a until the above pressure sensor S detects the aforementioned contacting pressure (S3). After pressure is detected by the above pressure sensor S, the descent velocity of the elevating member 107 is slowed on the determination that there is now only a short distance between the elevating member 107 and the cover glass 102a (S4). The elevating member 107 then stops its descent when the pressure sensor S of the suction pad 105 detects that the suction pad has attached by suction to the cover glass 102a (S5).

The PS rod 106, which has first come into contact with the cover glass 102a, cannot further descend after its contact with the cover glass 102a such that only the elevating member 107 continues to descend with respect to the PS rod 106. At this time, the PS rod spring 104b is compressed, thereby imparting a downward spring force on to the PS rod 106.

As the elevating member 107 descends, the suction pad 105 of the holding rod 103 comes into contact with the cover glass 102a, following contact by the PS rod 106. Thereafter, the holding rod 103 cannot further descend such that only the elevating member 107 continues to descend with respect to the holding rod 103. At this time, the holding rod spring 104a is compressed, thereby imparting a downward spring force on to the holding rod 103. Therefore, the suction pad 105 attaches by suction to the cover glass 102a.

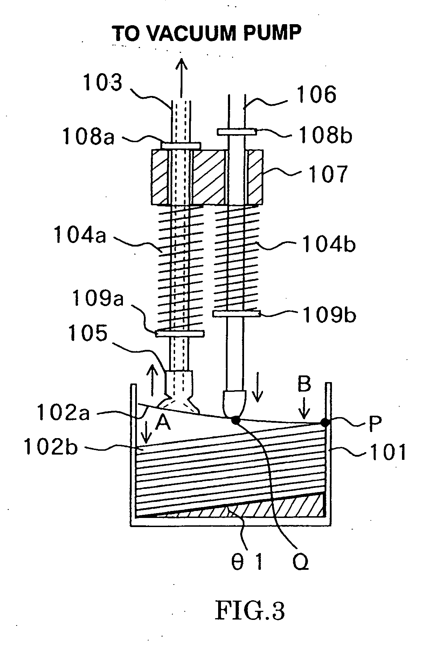

Fig. 3 shows a second step of the cover glass pick-up process.

When the suction sensor detects that the cover glass 102a has been attached by suction, the elevating member 107 starts to ascend.

As the elevating member 107 ascends, the holding rod 103 starts to ascend together with the elevating member 107 after the stopper ring 108a fixed on the holding rod 103 has come into contact with the upper end face of the elevating member 107. At this time, the cover glass 102a is held by suction from the suction pad 105 of the holding rod 103 near edge A of the cover glass 102a. The cover glass 102a is subsequently lifted clockwise about fulcrum P, which is where edge B of the cover glass 102a contacts those cover glasses stacked in layers beneath it.

When the elevating member 107 further ascends from its position in the state described above, the cover glass 102a is lifted about fulcrum P by the attachment point of the suction pad 105. At this time, the stopper ring 108b of the PS rod 106 has clearance with respect to the elevating member 107 such that the PS rod 106 is further biased downward by the PS rod spring 104b, thereby providing a downward pressure to a contacting point Q - which is where the PS rod comes into contact with the cover glass 102a.

Accordingly, the cover glass 102a is loaded having a fulcrum P on edge B thereof, a working point towards edge A to which an upward force is provided, and a working point (which is the contacting point on the PS rod 106) to which a downward force is provided. The result is that a large downward convex deflection is provided to the entire cover glass 102a by the contacting point of the PS rod 106 to the side of the suction pad 105. The amount of this deflection becomes larger as the elevating member 107 ascends, such that the curvature of the cover glass 102a held by suction by the suction pad 105 gradually becomes large.

On the other hand, the upward force provided by the suction pad 105 to cover glass 102a is not provided to the adjacent lower cover glasses 102b thereunder. Therefore, the cover glasses 102b cannot follow the change in the radius of curvature created on the cover glass 102a attached to the suction pad 105, thereby causing the separation of the adjacent lower cover glass 102b therefrom.

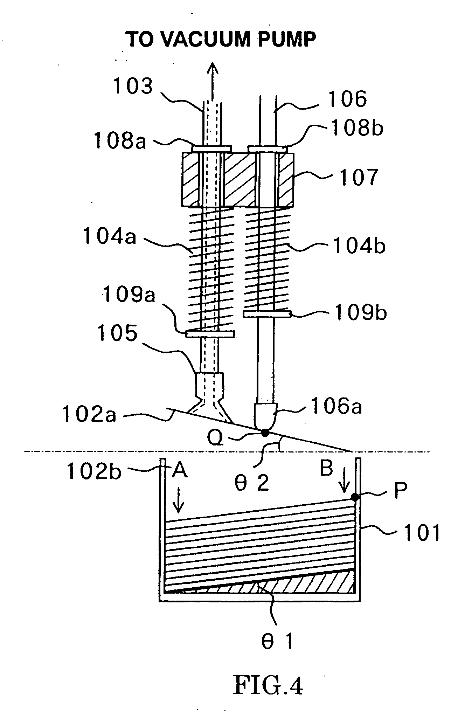

As shown in Fig. 3, the separation of the cover glass 102b is performed while the cover glass 102a remains in contact at its edge B with lower stacked layers of cover glasses 102b. Thus, the adjacent lower separated cover glass 102b returns to, or remains in, its initial normal place in the stack to be subjected to the next pick-up by suction means. Therefore, unlike the conventional method, there is no need to provide a separating member above the opening edge part of the case 101 in order to separate an adjacent affixed cover glass. Also, there is no need to provide the curved part R on the opening edge part of the case 101 for guiding a separated cover glass 102b to its normal stacking position. As a result, the suction pad 105 can properly hold, by suction, a single cover glass 102a in a sequential order from the stack. Fig. 4 shows a third step of the cover glass pick-up process.

As the elevating member 107 continues to ascend, and the stopper ring 108b fixed on the PS rod 106 comes into contact with the upper edge face thereof, the PS rod 106 starts to ascend together with the holding rod 103. On being further lifted, the cover glass 102a separates from the top layer cover glass of the remaining cover glasses 102b stacked in layers. Then, the cover glass 102a recovers its flat state upon being released from deflection. At this time, since the cap 106b has been set to be disposed lower in elevation than the suction pad 105 (as described above), the cover glass 102a proceeds to a cover glass affixation process while being held by suction at an inclined angle θ2.

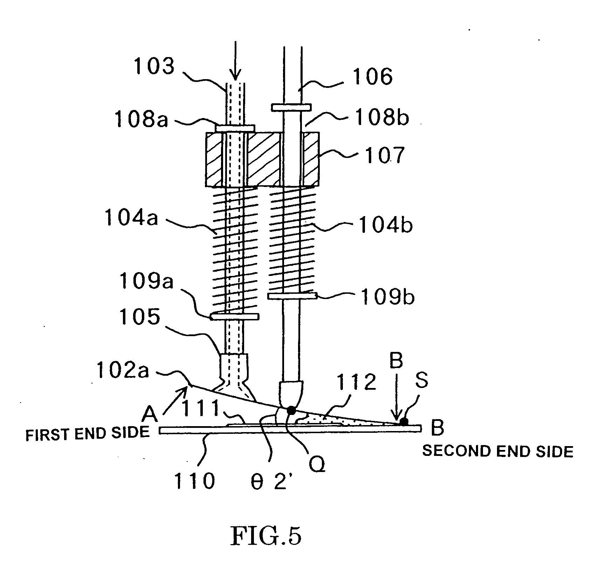

Fig. 5 shows the cover glass affixation process.

Fig. 5 shows the operational process to attach, as an addition, the cover glass 102a held by suction by the holding rod 103 to a glass slide 110 placed on a glass slide placing base (not shown). This is followed by sealing a cell sample piece 111 on the glass slide 110 with the aid of a sealing adhesive solution 112.

The PS rod 106 inserted through the elevating member 107 is disposed at a position corresponding to a second end of the glass slide 110 onto which the adhesive solution was dropped. The side of the glass slide 110 onto which the adhesive solution 112 was dropped will be hereafter referred to as the "second end" of the glass slide 110.

The holding rod 103 inserted through the elevating member 107 is disposed at a position corresponding to the other end of the glass slide 110. The other side of the glass slide 110 onto which the adhesive solution 112 was dropped will be hereafter referred to as the "first end" of the glass slide 110.

The cover glass 102a, which is held by suction with the suction pad 105 of the holding rod 103 on the other end thereof, is contacted with the PS rod 106 at a point marked Q near its almost longitudinal center part. The cover glass 102a having one end thereof inclined downward at the inclined angle θ2 descends toward the glass slide 110.

When the elevating member 107 descends for a certain distance, edge B of the cover glass 102a comes into contact with the upper face of the one end of the glass slide 110. Then, the elevating member 107 further descends slightly, and the cover glass 102a is provided with a downward convex deflection at a fulcrum S, and at a downward working point Q. When the cover glass 102a is bent by allowing the elevating member 107 to descend slightly, an inclined angle θ2' between the cover glass 102a and the glass slide 110 results. This angle θ2' is less than the inclined angle θ2 when a cover glass 102a is held by suction by holding rod 103 in an unloaded condition. Consequently θ2' < θ2.

When the elevating member 107 further descends, the cover glass 102a is pushed toward, and is affixed to, the glass slide 110 by the PS rod 106 and the suction pad 105. By thus pushing the cover glass 102a gradually, starting from the side where the adhesive solution 112 was dropped, the cell sample piece 111 is able to be sealed between the glass slide 110 and the cover glass 102a without the inclusion of air bubbles.

In the above embodiments, the cover glass 102a is picked up in the state where the cover glasses 102 are stacked in layers in the case 101 at the inclined angle θ1. However, the cover glasses 102 may be stacked horizontally, and may not be stacked in layers in the case 101.

That is, in the case of stacking the cover glasses 102 horizontally, the holding rod 103 and the PS rod 106 descend from the position of their stand-by state described above while posturing at the above inclined angle θ2 - which is an angle lowering toward the bottom right, and formed by a tangent line between the lower end of the cap 106a of the PS rod 106 and the suction face of the suction pad 105 fixed on the holding rod 103. Firstly, the cap 106a of the PS rod 106 comes into contact with the top cover glass 102, and then the suction pad 105 of the holding rod 103 comes into contact with the top cover glass 102.

Also in this case, the stopper ring 108a of the holding rod 103 first comes into contact with the upper face of the elevating member 107, allowing the holding rod 103 to move upward when the elevating member 107 starts to ascend. Then, the PS rod 103 pushes the cover glass 102 downward at the almost longitudinal center part of the cover glass 102, thereby deflecting downward the cover glass 102 at a fulcrum, the one end thereof, to change the curvature of the cover glass 102. Therefore, the cover glass 102a is naturally separated from adjacent lower cover glasses in the stack.

When the cover glasses 102 are stacked in layers in an inclined state or horizontally, the separating operation of the top cover glass 102a is carried out in the state that the cover glass 102a comes into contact with the second end of the adjacent lower cover glass 102b. It is merely necessary to stack a plurality of cover glasses 102 in layers, without any need to accommodate them in a container-like case.

## Claims

1. A cover glass transfer device for a sample sealing apparatus performing the steps of: sequentially picking up a top cover glass of a plurality of cover glasses stacked in layers by picking up means; and affixing the picked up cover glass onto a glass slide to seal a sample on the glass slide,
wherein the picking up means comprises:
an elevating member capable of moving up and down above the plurality of cover glasses stacked in layers;
a holding member movable up and down for a certain stroke with respect to the elevating member, the holding member having a suction member for vacuuming the cover glass at its distal end, the suction member coming into contact with the upper face of a top cover glass on a first end side; and
a push member movable up and down for a certain stroke with respect to the elevating member, the push member being attached while provided with a downward pressure, the lower end part of the push member coming into contact with the top cover glass at a position between the sucked portion with the suction member and the portion of the cover glass on a second end side, and
wherein after the holding member and the push member come into contact with the top cover glass due to the descent of the elevating member the holding member ascends together with the elevating member prior to the push member upon the initiation of ascent of the elevating member so as to change a curvature of the cover glass by allowing the one end of the cover glass which is not held by the suction member to bring in to contact with an adjacent lower cover glass to deflect the cover glass downward, and then the push member is allowed to ascend together with the elevating member in an integrated manner.

2. The cover glass transfer device for a sample sealing apparatus according to claim 1, wherein
the plurality of cover glasses are stacked in layers at an inclined angle such that a portion of the cover glass opposite to the suction member is positioned below a portion of the cover glass opposite to the push member.

3. The cover glass transfer device for a sample sealing apparatus according to any one of claims 1 and 2, wherein
the descending velocity of the elevating member is controlled in accordance with a stacked height of the plurality of cover glasses when the elevating member descends.

4. The cover glass transfer device for a sample sealing apparatus according to any one of claims 1 to 3, wherein
the cover glass is held by the holding member in a state where the held cover glass is separated from the adjacent lower cover glass stacked in layers by the ascent of the elevating member and an inclined posture of the cover glass is maintained by allowing the suction member to be placed at an upper position than that of the pushing member being in contact with the cover glass in rear of the suction member, and the elevating member descends toward the glass slide in order to affix the held cover glass onto the glass slide while maintaining the inclined posture thereof.
